# EUROPEAN PATENT SPECIFICATION

(11) **EP 0 329 974 B1**
(45) Date of publication and mention of the grant of the patent: **05.07.1995**
(21) Application number: 89101425.0
(22) Date of filing: 27.01.1989
(51) Int. Cl.: H01R 13/66, H01R 13/703, H02H 3/12

(54) **Electrical safety socket**
Elektrische Sicherheitssteckdose
Prise électrique de sécurité

(30) Priority: 28.01.1988 IL 85233
(43) Date of publication of application: 30.08.1989
(73) Proprietor: ADITAN, INC., New York 11771 (US)
(72) Inventor: Avitan, Shimon, 99750 Tzlafon (32) (IL)
(74) Representative: Modiano, Guido, Dr.-Ing.

(56) References cited:
- CH-A- 609 500
- DE-A- 2 624 316
- DE-A- 2 643 668
- DE-A- 3 638 737
- FR-A- 2 547 464
- US-A- 2 789 255

## Description

### BACKGROUND OF THE INVENTION

This invention relates to an electrical supply safety socket and, in particular, to such a socket which is childproof. An electrical safety socket according to the preamble of Claim 1 is known from DE-A-2 643 668. The general features of the invention are applicable to all mains supply sockets whether or not they are provided with a ground outlet. The term "socket" is taken to refer to any type of female connector for connecting a source of electric power to an appliance including, for example, wall and extension electricity supply sockets as well as electric light sockets.

It is known to provide mains supply safety sockets wherein the live and neutral outlets are covered with an insulating plate which is adapted to retract when the ground pin of a three pin plug is inserted into the ground outlet of the socket. It is generally arranged in such systems for the ground pin to be slightly longer than both the neutral and live pins in order to facilitate the operation of the safety mechanism.

One drawback with such a system is that the insulating plate is liable to jam. If it jams in the closed position the socket is unusable, and if it jams in the open position the socket is usable but the safety device is inoperative. In either case, an electric cable connecting an appliance to the socket remains unprotected and there constantly exists across its live and neutral cores the full mains supply voltage, whether or not the appliance is switched on. Furthermore, such a system is not childproof in that it is readily appreciated that insertion of a ground pin, or any substitute therefor, will on its own retract the insulating plate, thereby overriding the safety mechanism. Indeed, this approach is sometimes adopted in order to connect the supply leads from an electrical appliance directly to the mains without first attaching a plug to the appliance, and is obviously highly unsatisfactory from a safety point of view.

### SUMMARY OF THE INVENTION

It is an object of the invention to overcome or reduce at least some of the disadvantages associated with hitherto proposed systems. According to the invention there is provided an electrical safety socket comprising according to Claim 1. Particular embodiments are set out in the dependent claims.

Thus, in a socket according to the invention, the live and neutral feeders are connected to their respective socket outlets only when an electrical appliance is connected across the socket outlet, the electrical appliance effectively completing the circuit for the first switching circuit. Consequently, until an appliance is plugged in to the electrical socket, the electrical mains supply is disconnected from the socket outlets and the electrical socket is completely safe.

This will also apply is an appliance is plugged in to the socket outlets but is effectively disconnected therefrom by means of a switch associated with the appliance. For as long as the appliance switch is open, the electrical socket according to the invention will remain de-energized, the mains supply voltage being prevented from appearing across the socket outlets. This represents a major advantage over hitherto proposed systems since, until the appliance is switched on, the cable connecting the appliance to the electrical socket is also completely isolated from the mains supply.

### BRIEF DESCRIPTION OF THE DRAWINGS

The invention will now be described with regard to an electrical safety circuit for mounting inside an electrical socket and with reference to the accompanying drawings, in which:
Fig. 1 is a circuit diagram of a safety circuit in accordance with a first embodiment of the invention;
Fig. 2 is a circuit diagram of a safety circuit in accordance with a second embodiment of the invention;
Fig. 3 is a circuit diagram of a safety circuit in accordance with a third embodiment of the invention; and
Figs. 4a and 4b show a preferred arrangement for an additional socket outlet and corresponding plug pin for use with a third embodiment according to the invention.

### DETAILED DESCRIPTION OF PREFERRED EMBODIMENTS

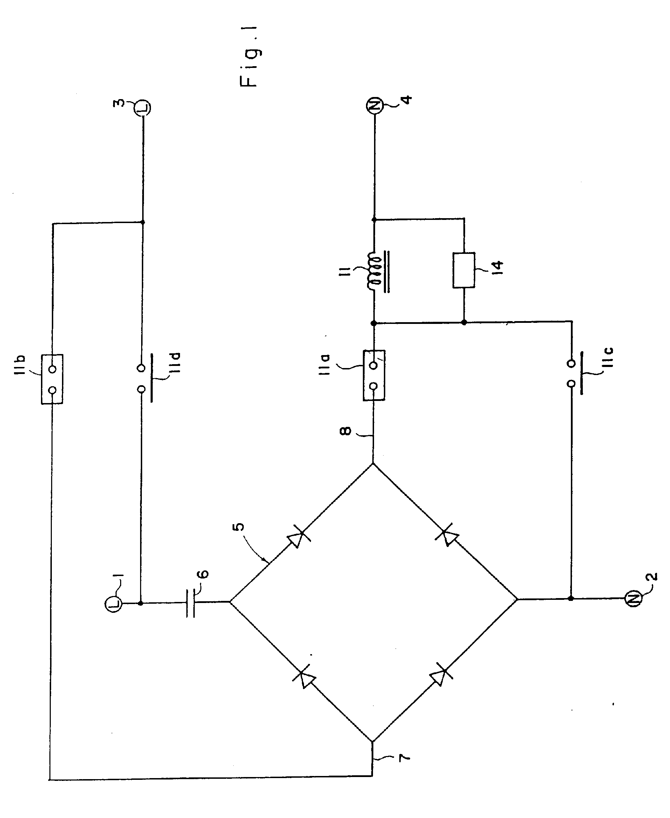

Referring to Fig. 1, there is shown a circuit using electromagnetic relays for connecting live and neutral socket inlets 1 and 2 to respective socket outlets 3 and 4. Throughout the following description, it will be assumed that the live and neutral socket inlets 1 and 2 are connected to corresponding live and neutral feeders (not shown). A bridge rectifier 5 is connected in series with a capacitor 6 across the live and neutral socket inlets 1 and 2 so as to produce low voltage positive and negative supply rails 7 and 8, respectively. Connected in series beween the low voltage supply rail 8 and the neutral socket outlet 4 is a relay coil 11 and a normally closed contact 11a. A second normally closed contact 11b is connected from the low voltage positive supply rail 7 to the live socket outlet 3. A first normally open contact 11c is connected between the junction of the relay coil 11 and the normally closed contact 11a, and the neutral socket inlet 2. A second normally open contact 11d is connected directly between the live socket inlet 1 and the live socket outlet 3. Also shown in the circuit is a shunt impedance 14 which is connected in parallel with the relay coil 11.

The operation of the circuit is as follows. The relay coil 11, the two normally closed contacts 11a and 11b, and the two normally open contacts 11c and 11d, constitute a switching circuit. The capacitor 6 serves as a high impedance which limits the effective a.c. voltage across the low voltage bridge rectifier 5 which rectifies the resultant low a.c. voltage so as to produce the required low d.c. voltage across rails 7 and 8. Use of the capacitor 6 therefore obviates the need to use a transformer which is more commonly used in conjunction with a bridge rectifier, to produce low voltage d.c. from a relatively high a.c. voltage input. Such transformers are relatively bulky compared to the capacitor 6 and, if used, would prevent the circuit according to the invention from being implemented within a standard electrical socket.

When an electrical appliance (not shown) is plugged into the socket outlets 3 and 4, the electrical appliance completes the circuit through the normally closed contacts 11a and 11b, the rectifier 5 and the relay coil 11. The relay coil 11 is contained within a standard low voltage relay which thus becomes energized, thereby closing contacts 11c and 11d, whilst opening the normally closed contacts 11a and 11b.

When the normally open contact 11c closes, the neutral socket inlet 2 is connected to the neutral socket outlet 4 via the parallel combination of the relay coil 11 and the shunt impedance 14. Similarly, when the normally open contact 11d closes, the live socket inlet 1 is connected directly to the live socket outlet 3. Thus, the relay coil 11 continues to be energized by the live and neutral feeders, respectively, through the now closed contacts 11c and 11d, the circuit being completed by the appliance connected to the live and neutral socket outlets 3 and 4, respectively. At the same time, the low voltage d.c. supply appearing across the low voltage positive and negative supply rails 7 and 8, is disconnected from the relay coil 11, as a result of the normally closed contacts 11a and 11b now being open.

It will be understood that in this embodiment the parallel combination of the relay coil 11 and the shunt impedance 14, together with the appliance itself connected across the live and neutral socket outlets 3 and 4, constitute a potential divider, in which the proportion of the total mains supply voltage appearing across the relay coil 11 is a function of the impedance of the appliance compared with that of the parallel combination of the relay coil 11 and the shunt impedance 14. Thus, the value of the shunt impedance 14 is selected in order to ensure that the majority of the mains supply voltage appears across the appliance, only a small and safe residue remaining across the relay coil 11. In this embodiment, only a small d.c. voltage appears across the live and neutral socket outlets 3 and 4, until an appliance is both plugged into the socket outlets and switched on.

Thus, until the appliance is switched on only a small d.c. voltage appears across the live and neutral socket outlets 3 and 4, this same small d.c. voltage also appearing across the corresponding live and neutral cores within a cable connecting the appliance to the electrical safety socket. Under these circumstances, both the socket and the appliance cable are electrically safe until the appliance is switched on, when nearly the full mains supply voltage will appear across the live and neutral socket outlets 3 and 4, as explained above.

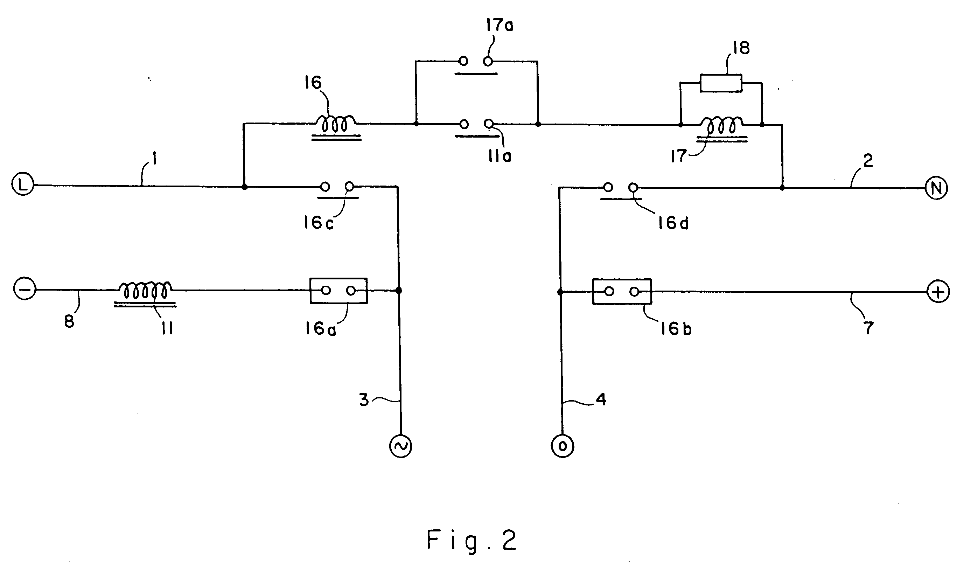

Referring to Fig. 2, there is shown a second embodiment wherein live and neutral socket inlets 1 and 2 are adapted to be connected to respective socket outlets 3 and 4. A combination of a bridge rectifier and capacitor (not shown) connected across the live and neutral socket inlets 1 and 2 produce low voltage positive and negative supply rails 7 and 8, respectively, in an identical manner to that described with reference to Fig. 1 above.

Connected to the low voltage negative supply rail 8 is one end of a relay coil 11 whose other end is connected to one terminal of a normally closed contact 16a whose other end is connected to the live socket outlet 3. Connected to the low voltage positive supply rail 7 is a second normally closed contact 16b whose other end is connected directly to the neutral socket outlet 4. Additionally, the live socket inlet 1 is connected directly to the live socket outlet 3 by means of a normally open contact 16c and, similarly, the neutral socket inlet 2 is connected directly to the neutral socket outlet 4 by means of a normally open contact 16d.

Also connected across the live and neutral socket inlets 1 and 2 is a second relay coil 16 in series with a normally open contact 11a and a third relay coil 17 across which is connected a shunt impedance 18. A normally open contact 17a is connected in parallel with the normally open contact 11a.

The operation of the circuit is as follows. The relay coil 11 and the normally open contact 11a constitute a switching circuit wherein the contact 11a closes when the relay coil 11 is energized. Similarly, the relay coil 16 together with the contacts 16a, 16b, 16c and 16d, constitute a second switching circuit wherein when the relay coil 16 becomes energized, contacts 16a and 16b open and contacts 16c and 16d close. The relay coil 17 together with the normally open contact 17a constitute a latching circuit wherein the contact 17a closes when the relay coil 17 becomes energized.

When an electrical appliance (not shown) is plugged in to the socket outlets 3 and 4, the electrical appliance completes the circuit through the normally closed contacts 16a and 16b, the rectifier 5 and the relay coil 11. The relay coil 11 is contained within a standard low voltage relay which thus becomes energized thereby closing contact 11a.

When contact 11a closes, the circuit from the live feeder through the relay coil 16, contact 11a and back to the neutral feeder becomes completed and, therefore, the relay 16 becomes energized. The relay 16 is any suitable relay which operates from an a.c. mains voltage, and its normally open contacts 16c and 16d must be suitable for operation at electrical mains voltages and must also have a current rating commensurate with the current rating of the socket. Upon coil 16 becoming energized, the normally closed contacts 16a and 16b open, thereby interrupting the d.c. voltage supply to the coil 11. At the same time, the normally open contacts 16c and 16d close and, in so doing, switch the live feeder to the live outlet 3 and the neutral feeder to the neutral outlet 4.

As soon as the low voltage d.c. supply is interrupted to the relay coil 11, the contact 11a opens and would, therefore, tend to interrupt the mains supply voltage to the coil 16. The relay 17 prevents this from happening since, being connected in series with the relay coil 16, it also becomes energized when the contact 11a closes. When the relay coil 17 becomes energized, the normally open contact 17a closes in parallel with the contact 11a, so that when contacts 16a and 16b open, interrupting power to the relay coil 11 and opening the contact 11a, the relay coils 16 and 17 are provided with an alternative current path through contact 17a. The relay coil 17 together with the normally open contact 17a thereby function as a latching circuit which ensures that the power supply to the relay coil 16 is maintained even when the relay coil 11 is switched out of circuit.

The relay coil 17 is preferably constituted by a low voltage miniature relay whose contact 17a is rated for operation at mains supply voltages and currents. The shunt impedance 18 may be constituted by a resistance or an inductance and its value is chosen compared with the impedance of the relay coil 17 so that most of the a.c. mains voltage is dropped across the relay coil 16, only a small fraction being applied across the relay coil 17. This arrangement works satisfactorily when the relay coil 17 is designed to operate from a low a.c. voltage. However, in an alternative embodiment the relay coil 17 may be adapted to operate from a low d.c. voltage, in which case a suitable rectifier (such as is constituted by the bridge rectifier 5) may be used in order to convert the low a.c. voltage across the coil 17 to a corresponding d.c. voltage.

In an alternative arrangement of this embodiment, the relay coils 16 and 17 may be connected in parallel, both in series with the parallel combination of contacts 11a and 17a. In this case, there must be connected in series with the relay coil 17, an impedance whose value is chosen so that substantially all the mains voltage is dropped across the impedance, with only a safe residue dropped across the relay coil 17.

The relay coil 11 is selected to operate from a low d.c. voltage, in order that the voltage initially appearing across the socket outlets 3 and 4 be insufficiently large to cause harm to a person making simultaneous contact with the two socket outlets. It will be understood that the resistance of the human body is too high to permit a sufficiently large current to flow through the human body in order to energize the relay coil 11. Under these circumstances, the circuit as described provides a simply, miniature and relatively cheap method of preventing the live and neutral feeders from being connected to their respective socket outlets until an appliance is plugged in to the outlets.

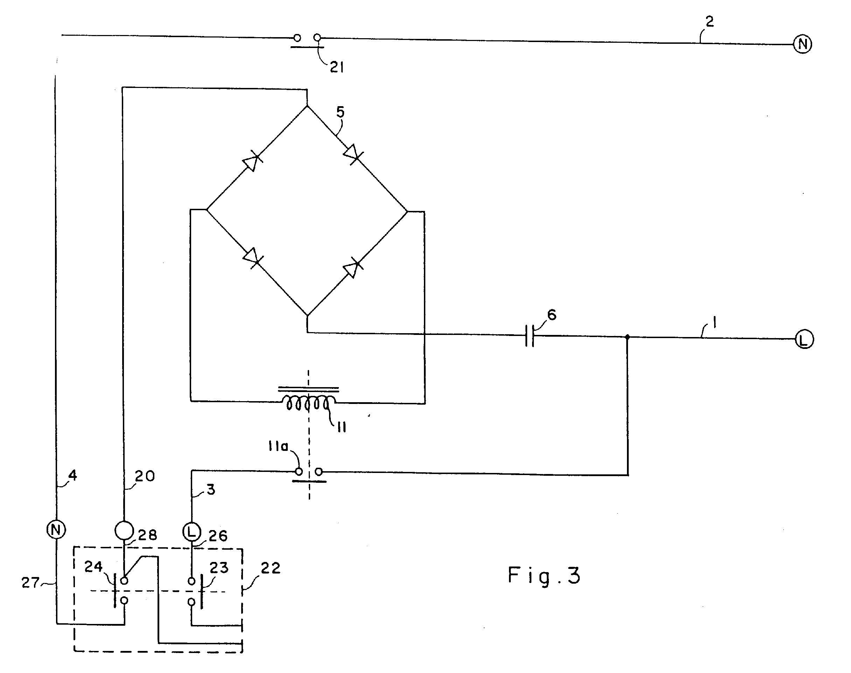

Fig. 3 shows a third embodiment of the invention comprising live and neutral socket inlets 1 and 2 which are adapted to be connected to live and neutral socket outlets 3 and 4, as above. Also as above, one input terminal of a bridge rectifier 5 is connected in series with a capacitor 6 to the live socket inlet 1, the function of the capacitor 6 being identical to that of the first two embodiments described with reference to Figs. 1 and 2 above. The other input terminal of the bridge rectifier 5 is connected to an additional socket outlet 20, which would constitute a fourth socket outlet in a standard socket containing live, neutral and ground outlets. Connected directly across the output terminals of the bridge rectifier 5 is a low voltage d.c. electromagnetic relay coil 11 provided with a single normally open contact 11a which is connected between the live socket inlet 1 and the live socket outlet 3. Similarly, the neutral socket inlet 2 is connected to the neutral socket outlet 4 via a normally open contact 21, which is adapted to close when a plug (not shown) connected to an electrical appliance 22 is inserted into the socket.

The appliance 22 is preferably fitted with a double pole switch including live and neutral contacts 23 and 24, respectively, which provide separate isolation of the live and neutral connections to the appliance 22. The supply end of the live contact 23 is connected via one core 26 of the appliance cable to the live pin of the appliance plug. Similarly, the supply end of the neutral switch 24 is connected via a second core 27 of the appliance cable to the neutral pin of the appliance plug. The other end of the neutral switch 24, as well as being connected in the normal manner to the appliance, is also connected via a third core 28 of the appliance cable to an additional pin in the appliance plug, which must therefore be specially adapted for the purpose. Thus, in the event that the appliance also requires a ground connection (not shown), the socket must be provided with four outlets, the appliance plug with four pins and the appliance cable with four cores.

The operation of the circuit is as follows. When the appliance plug is inserted into the socket, the normally open contact 21 closes, thereby connecting the neutral feeder to the neutral socket outlet 4. When the appliance 22 is switched on, the neutral switch 24 closes, thereby connecting the neutral feeder via the neutral socket outlet 4 and the neutral core 27 within the appliance cable to the additional core 28 of the appliance cable, and via the additional socket connection 20 to the neutral input connection of the bridge rectifier 5. Since the live feeder is permanently connected to the bridge rectifier 5 by the capacitor 6, the bridge rectifier 5 will start to conduct current as soon as the neutral connection to the bridge rectifier 5 is completed via the additional connection 20. Thus, under these conditions, the relay coil 11 is energized and the normally open contact 11a closes. This permits the live feeder to be connected to the live socket outlet 3, thereby completing the connection of the live and neutral feeders to their respective socket outlets 3 and 4.

In the above embodiment, even though the neutral feeder is connected to the neutral socket outlet 4 immediately on insertion of the appliance plug into the socket, the live feeder is not connected to the live socket outlet 3 until the appliance 22 is switched on, thereby closing the live and neutral switches 23 and 24.

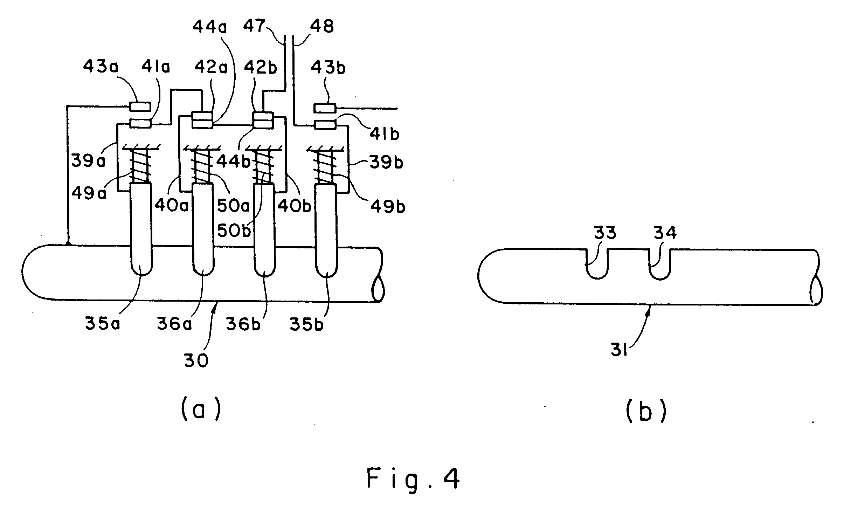

Figs. 4a and 4b show, respectively, an additional socket outlet 30 and a corresponding plug pin 31 which may be used in the third embodiment in order to connect the neutral wire 28 within the appliance 22 to the neutral wire 20 connected to the bridge rectifier 5, at the same time closing the normally open contact 21.

The plug pin 31 shown in Fig. 4b may be constituted by a simple brass prong in the middle of which are provided two recesses 33 and 34. The socket outlet 30 may be constituted by a corresponding brass tube of sufficient diameter to accommodate the plug pin 31. Provided along a longitudinal axis of the socket outlet 30 are four apertures which accommodate corresponding peripheral insulating prongs 35a and 35b and corresponding central insulating prongs 36a and 36b. The peripheral prongs 35a and 35b are connected by respective U-shaped members 39a and 39b to electrical contacts 41a and 41b. Similarly, the central prongs 36a and 36b are connected by U-shaped member 40a and 40b to contacts 42a and 42b.

Contacts 41a and 41b constitute first contacts of two normally open switches whose second contacts are 43a and 43b, respectively. Similarly, contacts 42a and 42b constitute first contacts of two normally closed switches whose second contacts are 44a and 44b, respectively. Contact 43a is connected directly to the conductive tube of the socket outlet 30. Contact 41a is connected directly to contact 42a, contact 44a is connected to contact 44b, and contact 42b is connected via an electrical wire 47 to the neutral supply connection of the bridge rectifier 5 shown in Fig.3. Contact 43b is connected directly to the neutral supply feeder whilst contact 41b is connected directly via a conducting wire 48 to the neutral socket outlet. Thus, the normally open switch constituted by contacts 41b and 43b is equivalent to the normally open contact 21 shown in Fig. 3.

The prongs 35a, 35b, 36a and 36b are biased via springs 49a, 49b, 50a and 50b such that the two normally open pairs of switch contacts remain open and the two normally closed pairs of switch contacts remain closed.

The additional socket outlet functions as follows. As soon as the plug pin 31 is inserted into the socket outlet 30, the prong 35b is pushed up against the biasing spring 49b, causing the normally open contacts 41b and 43b to close. As soon as this occurs, the neutral supply feeder connected to the contact 43b is connected via contact 41b and wire 48 to the neutral socket outlet. Although this provides the neutral connection to the electrical appliance, it will be understood from the description above with reference to Fig. 3, that the live supply to the appliance is not completed until the neutral supply is returned from the appliance to the neutral supply connection of the bridge rectifier 5 shown in Fig. 3. For as long as any of the switches constituted by contacts 41a and 43a, 42a and 44a or 42b and 44b remain open, the neutral connection from the socket outlet 30 to the conducting wire 47 remains broken, and consequently the relay 11 shown in Fig. 3 remains de-energized. As the plug pin 31 is inserted further into the socket 30, the prong 36b is pushed upwards against its biasing spring 50b, thereby opening the normally closed switch constituted by contacts 42b and 44b. As the plug pin 31 is pushed further into the socket outlet 30, the prong 36a is likewise pushed upwards against its biasing spring 50a, thereby opening the normally closed switch constituted by contacts 42a and 44a.

When the plug pin 31 is fully inserted into the socket outlet 30, the prong 35a is pushed upwards against its biasing spring 49a, closing the normally open switch constituted by contacts 41a and 43a. At the same time, the prongs 36a and 36b fall under the influence of their corresponding biasing springs 50a and 50b into the recesses 33 and 34 of the plug pin 31. When this happens, the three switches constituted by contacts 41a and 43a, 42a and 44a, and 42b and 44b, all close, thereby completing the neutral supply from the socket outlet 30 to the conducting wire 47. This, in turn, completes the neutral supply to the bridge rectifier 5 shown in Fig. 3, thereby energizing the relay coil 11 which now functions as described above with reference to Fig. 3.

It will be understood from the foregoing description that, since the appliance itself completes the circuit to the relay coil 11 in all three embodiments, the electrical appliance must be switched on in order for the circuit to operate. Thus, a cable connecting an electrical appliance to a socket protected by any of the circuits as described, will be completely isolated from the live feeder whilst the appliance is switched off. No harm can possibly befall a person who inadvertently trips over the cable, or even to someone who wilfully cuts the cable providing that, in so doing, no electrical connection is effected between the live and neutral cores of the first two embodiments, or the two neutral cores of the third embodiment.

The relays in each of the three embodiments of the invention are constituted by miniature components which may fit easily into the empty space behind a standard electrical socket. The bridge rectifier 5 and the capacitor 6 may most conveniently be soldered directly to the corresponding relay terminals (without employing a circuit board) in order to reduce to a minimum the volume occupied by the safety circuit.

Although the preferred embodiments have been described with reference to circuits utilising electromagnetic relays, it will be understood that the same principles may be applied in order to construct similar circuits utilizing solid-state circuit elements. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An electrical safety socket, comprising:
live and neutral socket inlets (1,2) to be connected to live and neutral supply feeders;
live and neutral socket outlets (3,4);
switching means (11c,11d; 16c,16d) arranged between one of said socket inlets (1,2) and a respective socket outlet (3,4), for connecting said live and neutral socket inlets (1,2) to a respective live and neutral socket outlet (3,4);
characterized in that the socket further comprises
circuit means including a first switching circuit (11,14) operatively connected to said switching means (11c-11d;16c,16d), which operates said switching means (11c,11d;16c,16d) only when said live and neutral supply feeders are connected to a respective socket inlet (1,2), an appliance (22) being connected across said live and neutral socket outlets (3,4) and the appliance (22) being switched on, the appliance thus completing the circuit to said first switching circuit (11,14), said first switching said first switching circuit (11,14) being operated from a low d.c. voltage which is generated by a d.c. voltage source (5,6) comprising a rectifier circuit (5) connected in series with a high impedance element (6), said d.c. voltage source (5,6) deriving said low d.c. voltage from the voltage across said live and neutral socket inlets (1,2).

2. The socket according to claim 1, characterized in that said switching means (11c-11d) are constituted by normally open contacts (11c-11d).

3. The socket according to claims 1 or 2, characterized in that said first switching circuit (11,14) includes a first electromagnetic relay (11).

4. The socket according to claim 3, characterized in that said first electromagnetic relay (11) has a first relay coil, and is adapted to operate from said low d.c. voltage.

5. The socket according to claim 4, characterized in that said first electromagnetic relay (11) is adapted to operate from said d.c. voltage source (5,6).

6. The socket according to one or more of claims 1 to 5, characterized in that said high impedance element (6) is constituted by a capacitor.

7. The socket according to claims 4, 5 or claims 4 and 6, further including at least one normally closed contact (11a-11b) operated by said first switching (11,14) and being in series with said relay coil (11) and said d.c. voltage source (5,6).

8. The socket according to claim 4, 5 or claims 4 and 6 or 4 and 7, characterized in that said first switching circuit (11,14) includes a shunt impedance (14) which is connected across said relay coil (11) in order to limit the current flow through said relay coil (11).

9. The socket according to claim 8, characterized in that said shunt impedance (14) is constituted by an inductive element.

10. The socket according to claim 3, 4, 5, 7, 8 or 9 or claims 3 and 6, characterized in that said relay (11) is connected in series with one of said normally open contacts (11c-11d) and a corresponding socket inlet (1,2).

11. The socket according to claim 3, 4, 5, 7, 8, 9 or claims 3 and 6, characterized in that the operation of said relay (11) is adapted to open said at least one normally closed contact (11a-11b) and to close said normally open contacts (11c-11d).

12. The socket according to one or more of the preceding claims, characterized in that said circuit means further includes a second switching circuit (16,16a-16d) responsive to the operation of said first switching circuit (11,14), thereby connecting said live and neutral socket inlets (1,2) to respective live and neutral outlets (3,4) and disconnecting said first switching circuit (11,14) from said d.c. voltage.

13. The socket according to claim 12, characterized in that said circuit means further includes a latching circuit (17,17a) responsive to the operation of said first switching circuit (11,14) for maintaining the supply from said supply feeders to said second switching circuit (16) when said first switching (11,14) circuit is disconnected.

14. The socket according to claim 12 or 13, characterized in that said second switching circuit (16) comprises a second electromagnetic relay having a second relay coil.

15. The socket according to claim 13 or claims 13 and 14, characterized in that said latching circuit (17,17a) is constituted by a low voltage electromagnetic relay (17) having a third coil.

16. The socket according to claim 15, characterized in that said third relay coil (17) of said latching circuit (17,17a) is connected in series with said second relay coil of said second switching circuit (16), so as to form a voltage divider across said live and neutral socket inlets (1,2), the correct relationship between the impedances of said second and third relay coils being maintained by means of a shunt impedance (18) connected across said third relay coil (17) of said latching circuit (17,17a).

17. The socket according to claim 15 or 16, characterized in that said third relay coil (17) of said latching circuit (17,17a) is adapted to operate from a d.c. voltage.

18. The socket according one or more of the preceding claims, characterized in that said rectifier circuit (5) is formed by a plurality of diodes.

19. The socket according to one or more of the preceding claims, characterized in that said impedance (6) is constituted by a capacitor.

20. The socket according to one or more of the preceding claims, characterized in that it includes an additional socket outlet (30) for connecting a first of said supply feeders to said first switching circuit (11,14), when an electrical appliance (22) plug is plugged into the socket, so as to complete the circuit to said first switching circuit (11,14), and when said first supply feeder is connected to a respective socket inlet (1,2).

21. A combination of the socket according to claim 20 and an additional plug pin (31), characterized in that said socket includes at least one additional normally open switch (41a,43a;41b,43b) which is adapted to close when said additional plug pin (31) is fully inserted into said additional socket outlet (30), thereby connecting said first supply feeder from one of said live and neutral socket outlets (3,4) to said first switching circuit (11,14) through said appliance (22).

22. The combination according to claim 21, characterized in that there is further provided in series with said additional normally open switch (41a,43a;41b,43b) at least one normally closed switch (42a,44a;42b,44b) which is adapted to open when said additional plug pin (31) is partially inserted into said additional socket outlet (30).

23. The combination according to claims 21 and/or 22, further comprising:
a plurality of insulating prongs (35a-35b,36a-36b);
a conducting tube provided with first and second peripheral apertures for accommodating respective insulating prongs (35a-35b,36a-36b); and
switch contacts (41a-44b) actuable by at least one of said insulating prongs (35a-35b,36a-36b);
wherein said plug pin (31) is insertable into said conducting tube, said plug pin (31) being provided with at least one recess (33,34) for accommodating at least one of said insulating prongs (35a-35b,36a-36b) when said plug pin (31) is fully inserted into said conducting tube.

## Patentansprüche

1. Elektrische Sicherheitssteckdose umfassend:
spannungsführende und neutrale Steckdoseneingänge (1, 2), um an spannungsführende und neutrale Versorgungsleitungen angeschlossen zu werden;
spannungsführende und neutrale Steckdosenausgänge (3, 4);
eine Schaltvorrichtung (11c, 11d; 16c, 16d), die zwischen einem der Steckdoseneingänge (1, 2) und dem jeweiligen Steckdosenausgang (3, 4) angeordnet ist, um die spannungsführenden und neutralen Steckdoseneingänge (1, 2) mit dem jeweiligen spannungsführenden und neutralen Steckdosenausgang (3, 4) zu verbinden; dadurch gekennzeichnet, daß die Steckdose ferner umfaßt:
eine Schaltkreisvorrichtung, die eine erste Schaltanordnung (11, 14) umfaßt, die operativ mit der Schaltvorrichtung (11c-11d; 16c, 16d) verbunden ist, die die Schaltvorrichtung (11c, 11d; 16c, 16d) nur dann betätigt, wenn die spannungsführenden und neutralen Versorgungsleitungen mit dem jeweiligen Steckdoseneingang (1, 2) verbunden sind, wobei eine Vorrichtung (22) zwischen den spannungsführenden und neutralen Steckdosenausgängen (3, 4) angeschlossen und die Vorrichtung (22) eingeschaltet ist, wobei die Vorrichtung den Stromkreis zur ersten Schaltanordnung (11, 14) vervollständigt;
wobei die erste Schaltanordnung (11, 14) derart ausgebildet ist, daß sie von einer Niedergleichspannung betrieben wird, die von einer Gleichspannungsquelle (5, 6) erzeugt wird, umfassend eine Gleichrichterschaltung (5), die in Reihe mit einem hochohmigen Element (6) verbunden ist, wobei die Gleichspannungsquelle (5, 6) die Niedergleichspannung von der an den spannungsführenden und neutralen Steckdoseneingängen (1, 2) anliegenden Spannung ableitet.

2. Steckdose gemäß Anspruch 1, dadurch gekennzeichnet, daß die Schaltvorrichtung (11c-11d) gewöhnlicherweise offene Kontakte (11c-11d) umfaßt.

3. Steckdose gemäß Anspruch 1 oder 2, dadurch gekennzeichnet, daß die Schaltanordnung (11, 14) ein ertes elektromagnetisches Relais (11) umfaßt.

4. Steckdose gemäß Anspruch 3, dadurch gekennzeichnet, daß das erste elektromagnetische Relais (11) eine erste Relaisspule aufweist, und dafür ausgebildet ist, um von der Niedergleichspannung betrieben zu werden.

5. Steckdose gemäß Anspruch 4, dadurch gekennzeichnet, daß das erste elektromagnetische Relais (11) dafür ausgebildet ist, um von der Gleichspannungsquelle (5, 6) betrieben zu werden.

6. Steckdose gemäß einem oder mehrerer Ansprüche 1 bis 5, dadurch gekennzeichnet, daß das hochohmige Element (6) aus einem Kondensator besteht.

7. Steckdose gemäß Anspruch 4, 5 oder Ansprüche 4 und 6 ferner mindestens einen gewöhnlicherweise geschlossenen Kontakt (11a; 11b) umfassend, der von der ersten Schaltanordnung (11, 14) betrieben wird, und der mit der Relaisspule (11) und der Gleichspannungsquelle (5, 6) in Reihe geschaltet ist.

8. Steckdose gemäß Anspruch 4, 5 oder Ansprüche 4 und 6 oder 4 und 7, dadurch gekennzeichnet, daß die erste Schaltanordnung (11, 14) eine Querimpedanz (14) umfaßt, die an die Relaisspule (11) angeschlossen ist, um den Stromfluß durch die Relaisspule (11) zu begrenzen.

9. Steckdose gemäß Anspruch 8, dadurch gekennzeichnet, daß die Querimpedanz (14) aus einem induktiven Element besteht.

10. Steckdose gemäß Anspruch 3, 4, 5, 7, 8 oder 9 oder Ansprüche 3 und 6, dadurch gekennzeichnet, daß das Relais (11) mit einem der gewöhnlicherweise offenen Kontakte (11c - 11d) und einem entsprechenden Steckdoseneingang (1, 2) in Reihe verbunden ist.

11. Steckdose gemäß Anspruch 3, 4, 5, 7, 8, 9 oder 10 oder Ansprüche 3 und 6, dadurch gekennzeichnet, daß die Arbeitsweise des Relais (11) dafür angepaßt ist, den zumindest einen gewöhnlicherweise geschlossenen Kontakt (11a - 11b) zu öffnen, und die gewöhnlicherweise offenen Kontakte (11c - 11d) zu schließen.

12. Steckdose gemäß einem oder mehrerer, vorhergehender Ansprüche, dadurch gekennzeichnet, daß die Schaltkreisvorrichtung ferner eine zweite Schaltanordnung (16, 16a - 16d) umfaßt, die auf die Arbeitsweise der ersten Schaltanordnung (11, 14) reagiert, um die spannungsführenden und neutralen Steckdoseneingäge (1, 2) mit den jeweiligen spannungsführenden und neutralen Ausgängen (3, 4) zu verbinden, und um die erste Schaltanordnung (11, 14) von der Gleichspannung abzuschalten.

13. Steckdose gemäß Anspruch 12, dadurch gekennzeichnet, daß die Schaltkreisvorrichtung ferner eine Verriegelungsschaltung (17, 17a) umfaßt, die auf die Arbeitsweise der ersten Schaltanordnung (11, 14) reagiert, um die Spannungsversorgung von den Versorgungsleitungen zu der zweiten Schaltanordnung (16) aufrechtzuerhalten, wenn die erste Schaltanordnung (11, 14) abgeschaltet wird.

14. Steckdose gemäß Anspruch 12 oder 13, dadurch gekennzeichnet, daß die zweite Schaltanordnung (16) ein zweites elektromagnetisches Relais mit einer zweiten Relaisspule umfaßt.

15. Steckdose gemäß Anspruch 13 oder Ansprüche 13 und 14, dadurch gekennzeichnet, daß die Verriegelungsschaltung (17, 17a) aus einem niederspannungselektromagnetischen Relais (17) mit einer dritten Spule besteht.

16. Steckdose gemäß Anspruch 15, dadurch gekennzeichnet, daß die dritte Relaisspule (17) der Verriegelungsschaltung (17, 17a) mit der zweiten Relaisspule der zweiten Schaltanordnung (16) in Reihe verbunden ist, um einen Spannungsteiler an den spannungsführenden und neutralen Steckdoseneingängen (1, 2) zu bilden, wobei die richtige Beziehung zwischen den Impedanzen der zweiten und dritten Relaisspule durch eine Querimpedanz (18) gehalten wird, die an die dritte Relaisspule (17) der Verriegelungsschaltung (17, 17a) angeschlossen ist.

17. Steckdose gemäß Anspruch 15 oder 16, dadurch gekennzeichnet, daß die dritte Relaisspule (17) der Verriegelungsschaltung (17, 17a) dafür ausgebildet ist, um von einer Gleichspannung betrieben zu werden.

18. Steckdose gemäß einem oder mehrerer, vorhergehender Ansprüche, dadurch gekennzeichnet, daß die Gleichrichterschaltung (5) durch eine Vielzahl von Dioden gebildet ist.

19. Steckdose gemäß einem oder mehrerer, vorhergehender Ansprüche, dadurch gekennzeichnet, daß die Impedanz (6) aus einem Kondensator gebildet ist.

20. Steckdose gemäß einem oder mehrerer, vorhergehender Ansprüche, dadurch gekennzeichnet, daß sie einen zusätzlichen Steckdosenausgang (30) umfaßt, um eine erste der Versorgungsleitungen mit der Schaltanordnung (11, 14) zu verbinden, wenn der Stecker einer elektrischen Vorrichtung (22) in die Steckdose eingesteckt wird, um den Stromkreis zur ersten Schalt-anordnung (11, 14) zu vervollständigen, und wenn die erste Versorgungsleitung an den jeweiligen Steckdoseneingang (1, 2) angeschlossen ist.

21. Kombination aus der Steckdose gemäß Anspruch 20 und einem zusätzlichen Steckstift (31), dadurch gekennzeichnet, daß die Steckdose mindestens einen zusätzlichen, gewöhnlicherweise offenen Schalter (41a, 43a; 41b, 43b) umfaßt, der zum Schließen ausgebildet ist, wenn der zusätzliche Steckstift (31) vollständig in den zusätzlichen Steckdosenausgang (30) eingeführt wird, wodurch die erste Versorgungsleitung von einem der spannungsführenden und neutralen Steckdosenausgänge (3, 4) über die Vorrichtung (22) mit der ersten Schaltanordnung (11, 14) verbunden wird.

22. Kombination gemäß Anspruch 21, dadurch gekennzeichnet, daß ferner in Reihe mit dem zusätzlichen gewöhnlicherweise offenen Schalter (41a, 43a; 41b, 43b) mindestens ein gewöhnlicherweise geschlossener Schalter (42a, 44a; 42b, 44b) vorgesehen ist, der zum Öffnen ausgebildet ist, wenn der zusätzliche Steckstift (31) teilweise in den zusätzlichen Steckdosenausgang (30) eingesteckt wird.

23. Kombination gemäß Ansprüche 21 und/oder 22 ferner umfassend:
eine Vielzahl von isolierenden Stiften (35a-35b, 36a-36b);
ein leitendes Rohr, das mit ersten und zweiten pheripheren Öffnungen ausgestattet ist, um die jeweiligen isolierenden Stifte (35a-35b, 36a-36b) aufzunehmen; und
Schalterkontakte (41a-44b), die von mindesten einem der isolierenden Stifte (35a-35b, 36a- 36b) betätigbar sind;
wobei der Steckstift (31) in das leitende Rohr einsteckbar ist, wobei der Steckstift (31) mit mindestens einer Vertiefung (33, 34) ausgestattet ist, um mindestens einen der isolierenden Stiften (35a-35b, 36a-36b) aufzunehmen, wenn der Steckstift (31) in das leitende Rohr vollständig eingesteckt wird.

## Revendications

1. Une prise de courant électrique de sûreté, comprenant:
douilles sous tension et neutres d'entrée (1,2), à être reliées à des conducteurs d'alimentation sous tension et neutres,
douilles sous tension et neutres de sortie (3,4);
moyens de commutation (11c, 11d; 16c, 16d) disposés entre une des dites douilles (1, 2) d'entrée et une douille de sortie relative (3,4), pour relier lesdites douilles d'entrée sous tension et neutres (1,2) à une douille de sortie (3,4) sous tension et respectivement neutre;
caracterisée en ce que la prise de courant comprend en outre:
- des moyens à circuit comprenant un premier circuit de commutation (11,14) opérationnellement reliés auxdits moyens de commutation (11c-11d;16c,16d) qui font entrer en fonction lesdits moyens de commutation (11c,11d,16c,16d) seulement quand lesdits conducteurs sous tension et neutres d'alimentation sont reliés à une douille d'entrée (1,2) relative:
un appareil utilisateur (22) étant relié entre lesdites douilles de sortie sous tension et neutres (3, 4) et l'appareil utilisateur (22) étant branché, l'appareil pouvant de cette façon compléter le circuit en relation au premier circuit de commutation (11, 14), ledit premier circuit de commutation étant mis en fonction à partir d'une basse tension fournissant du courant continu (5, 6), qui comprend un circuit redresseur (5) relié en série avec un élement à haute impédance (6), ladite source de tension (5, 6) pour le courant continu dérivant ladite tension basse à partir de la tension entre lesdites douilles d'entrée sous tension et neutres (1, 2).

2. Prise de courant d'après la revendication 1, caracterisée en ce que les moyens de commutation (11c, 11d) sont constitués par des contacts normalement ouverts (11c, 11d).

3. Prise de courant d'après les revendications 1 ou 2, caracterisée en ce que ledit premier circuit de commutation (11, 14) comporte un premier relais électromagnetique (11).

4. Prise de courant d'après la revendication 3, caracterisée en ce que ledit premier relais électromagnétique (11) présente une première bobine du relais et est apte à fonctionner à partir de ladite basse tension fournissant le courant continu.

5. Prise de courant d'après la revendication 4, caracterisée en ce que ledit premier relais électromagnétique (11) est capable de fonctionner à partir de ladite source de tension (5, 6) fournissant le courant continu.

6. Prise de courant d'après une ou plusieurs des revendications 1 à 5, caracterisée en ce que l'élément (6) à impédance élevée est formé par une capacité.

7. Prise de courant d'après les revendications 4, 5 ou 4 et 6, comprenant ultérieurement au moins un contact normalement fermé (11a-11b) mis en fonction par ledit premier circuit de commutation (11,14) et étant inséré avec ladite bobine (11) du relais et ladite source de tension (5, 6) fournissant le courant continu.

8. Prise de courant d'après les revendications 4, 5 ou les revendications 4 et 6 ou 4 et 7, caracterisée en ce que ledit premier circuit de commutation (11, 14) comprend une impédance en dérivation (14) qui est reliée entre ladite bobine (11) du relais de façon à limiter le passage de courant à travers ladite bobine (11) du relais.

9. Prise de courant d'après la revendication 8, caracterisée en ce que ladite impédance (14) en dérivation est constituée par un élément inductif.

10. Prise de courant d'après les revendications 3, 4, 5, 7, 8 ou 9 ou les revendications 3 et 6, caracterisée en ce que ledit relais (11) est relié en série avec un des contacts normalement ouverts (11c-11d) et une douille d'entrée correspondante (1, 2).

11. Prise de courant d'après les revendications 3, 4, 5, 7, 8, 9 ou 10 ou les revendications 3 et 6, caracterisée en ce que l'entrée en fonction du relais (11) est capable d'ouvrir au moins un des contacts normalement fermés (11a-11b) et de fermer lesdits contacts normalement ouverts (11c-11d).

12. Prise de courant d'après une/ou des plusieurs des revendications précédentes, caracterisée en ce que les moyens de circuit comprennent en outre un deuxième circuit de commutation 16, 16a, 16d) sensible au fonctionnement du premier circuit de commutation (11, 14), reliant ainsi lesdites douilles d'entrée sous tension et neutres (1, 2) aux douilles de sortie (3, 4) sous tension et neutres relatives et interrompant la liaison du premier circuit de commutation (11, 14) avec ladite tension qui fournit le courant continu.

13. Prise de courant d'après la revendication 12 ou 13, caracterisée en ce que les moyens à circuit comprennent en outre un circuit de verrouillage (17, 17a) sensible au fonctionnement du premier circuit de commutation (11, 14) pour maintenir l'alimentation à partir desdits conducteurs d'alimentation vers le dit deuxième circuit d'alimentation (16) quand ledit premier circuit de commutation (11, 14) est débranché.

14. Prise de courant d'après les revendications 12 ou 13, caracterisée en ce que ledit deuxième circuit de commutation (16) comprend un deuxième relais électromagnétique ayant une deuxième bobine de relais.

15. Prise de courant d'après la revendication 13 ou les revendications 13 et 14, caracterisée en ce que ledit circuit de verrouillage (17, 17a) est formée par un relais électromagnétique (17) à basse tension comportant une troisième bobine.

16. Prise de courant d'après la revendication 15, caracterisée en ce que ladite troisième bobine de relais (17) du circuit de verrouillage (17, 17a) est reliée en série avec ladite seconde bobine du second circuit de commutation (16) de façon à former un diviseur de tension entre les douilles d'entrée sous tension et neutres (1, 2) la relation correcte entre les impédances desdites deuxièmes et troisièmes bobines de relais étant maintenue au moyen d'une impédance de dérivation (18) reliée entre ladite troisième bobine (17) du relais du circuit de verrouillage (17, 17a).

17. Prise de courant d'après les revendications 15 ou 16, caracterisée en ce que ladite troisième bobine (17) de relais du circuit de verrouillage (17, 17a) est capable de fonctionner à partir d'une tension qui fournit un courant continu.

18. Prise de courant d'après une des plusieurs revendications précédentes, caracterisée en ce que le circuit redresseur (5) est formé par une pluralité de diodes.

19. Prise de courant d'après une ou plusieurs des revendications précédentes, caracterisée en ce que ladite impédance (16) est constituée par une capacité.

20. Prise de courant d'après une ou plusieurs des revendications précédentes, caracterisée en ce qu'elle comporte une douille de sortie (30) additionnelle pour relier un premier desdits conducteurs d'alimentation audit premier circuit de commutation (11, 14) quand une fiche de l'appareil électrique utilisateur (22) est introduite dans la douille de façon à compléter le circuit dudit premier circuit de commutation (11, 14), et quand ledit premier conducteur d'alimentation est relié à une douille d'entrée (1, 2) relative.

21. Une combinaison de la prise de courant d'après la revendication 20, et une fiche (31) additionnelle caracterisée en ce que ladite prise comporte au moins un commutateur normalement ouvert additionnel (41a, 43a;41b,43b) qui est capable de fermer le circuit quand ladite fiche additionnelle (31) est totalement introduite dans ladite douille d'entrée (30) additionnelle en reliant ainsi ledit premier conducteur d'alimentation à partir des douilles de sortie (3,4) sous tension et neutres audit premier circuit de commutation (11, 14) à travers ledit appareil utilisateur.

22. La combinaison d'après la revendication 21, caracterisée en ce qu'on prévoit ultérieurement en série avec ledit commutateur normalement ouvert additionnel (41a,43a;42b,44b) au moins un commutateur normalement fermé (42a,44a;42b,44b) qui est capable d'être ouvert quand ladite fiche additionnelle (31) est partiellement introduite dans ladite douille de sortie additionnelle (30).

23. La combinaison d'après les revendications 21 et/ou 22, comprenant en outre;
une pluralité de pointes isolantes (35a-35b,36a-36b);
un tube conducteur muni d'une première et d'une deuxième ouverture périphérique pour recevoir respectivement des pointes isolantes (35a-35b,36a-36b); et
des contacts de commutation (41a-44b) activés par au moins une desdites pointes isolantes (35a-35b,36a-36b);
et dans laquelle combinaison ladite fiche (31) de la prise peut être introduite dans ledit tube conducteur, ladite fiche (31) étant munie d'un évidement pour recevoir au moins une des dites pointes isolantes (35a-35b,36a-36b) quand ladite fiche (31) est totalement introduite dans ledit tube conducteur.
